# FASCICULE DE BREVET EUROPEEN

(11) **EP 2 097 210 B1**
(45) Date de publication et mention de la délivrance du brevet: **13.04.2011**
(21) Numéro de dépôt: 07857641.0
(22) Date de dépôt: 14.12.2007
(51) Int. Cl.: B23K 37/047, B23P 19/00, B23Q 7/00, B23Q 7/14, B62D 65/06, B65G 17/20, B23K 101/00

(54) **PROCEDE ET SYSTEME DE POSITIONNEMENT D'UNE PIECE SUR UNE CHAINE D'ASSEMBLAGE ET DE FABRICATION**
VERFAHREN UND SYSTEM ZUR POSITIONIERUNG EINES TEIL AUF EINEM MONTAGE- UND PRODUKTIONSLINIE
METHOD OF AND SYSTEM FOR POSITIONING A PART ON AN ASSEMBLY AND MANUFACTURE LINE

(30) Priorité: 22.12.2006 FR 0655894
(43) Date de publication de la demande: 09.09.2009
(73) Titulaire: Renault S.A.S., 92100 Boulogne-Billancourt (FR)
(72) Inventeur: ALBOUZE, Fabien, F-78180 Montigny Le Bretonneux (FR); LEVOUIN, Eric, F-91800 Brunoy (FR)
(86) Numéro de dépôt international: PCT/EP2007/064007
(87) Numéro de publication internationale: WO 2008/080806

(56) Documents cités:
- EP-A- 1 302 415
- DE-B3- 10 313 463
- JP-A- 1 222 828
- JP-A- 4 256 622
- US-A- 4 796 346

## Description

La présente invention concerne un procédé et un système de positionnement d'une pièce par rapport à poste de travail dans le cadre d'une chaîne d'assemblage ou de fabrication conformément au préambule des revendications 1 et 2 respectivement (voir, par exemple, JP 1/222 828 A). Elle est prévue pour être appliquée sur une chaîne d'assemblage d'éléments de carrosserie, tels qu'un côté de caisse d'automobile, dans le but de positionner avec précision cet élément dans un repère fixe où évoluent des outils de travail ou d'assemblage, tels que un ou plusieurs robots de soudure et/ou des pinces mécanisées de soudage fixes ou mobiles, ou d'autres outils de collage.

### Art antérieur et problème posé

Dans le domaine de l'assemblage des différents éléments d'une carrosserie automobile, pour plusieurs postes d'assemblage et/ou de soudage, il est obligatoire de réceptionner la pièce sur laquelle il est prévu de travailler au poste en question. Ainsi, pour souder certaines parties d'un côté de caisse de carrosserie, il est nécessaire de réceptionner ledit côté de caisse pour le positionner de façon correcte dans l'appareil qui doit le maintenir pendant que le ou les robots doivent effectuer leurs opérations, par exemple de soudage ou d'encollage. De plus, il est d'usage d'utiliser, pour le transport de chaque côté de caisse d'un poste à un autre, une balancelle sur laquelle le côté de caisse est placé. Cette balancelle est donc assujettie à un parcours aérien par un système de rail qui survole les différents postes où les côtés de caisse doivent être saisis et travaillés. Pour se faire, il est nécessaire d'arrêter au poste déterminé la balancelle et de la positionner de façon précise et déterminée. Ensuite, intervient une phase de relocalisation du côté de caisse par un ou des éléments préhenseurs du poste de travail. Enfin, s'ensuit la saisie du côté de caisse de façon précise par ce ou ces éléments préhenseurs dans le but d'effectuer le travail déterminé.

Le souci des concepteurs de telles chaînes d'assemblage est d'organiser ces opérations, afin de diminuer le temps d'intervention global du poste de travail, c'est-à-dire des préhenseurs et des robots de soudage. Or, dans le cas précédemment présenté, la relocalisation du côté des caisses par le ou les préhenseurs du poste de travail se fait alors que le ou les robots de travail sont inopérants en attente que le côté de caisse soit relocalisé et enfin, appréhendé par le ou les éléments préhenseurs.

Le but de l'invention est de remédier à ces inconvénients en écourtant au possible cette phase pendant laquelle les robots de travail, par exemple de soudage, sont inopérationnels.

### Résumé de l'invention

A cet effet, le premier objet principal de l'invention est un procédé de positionnement d'une pièce sur une chaîne d'assemblage ou de fabrication tel que défini dans la revendication 1.

Le deuxième objet principal de l'invention est un système de positionnement pour mettre en oeuvre, dans une chaîne de fabrication de côtés de caisse pour véhicules automobiles, le procédé ci-dessus résumé tel que défini dans la revendication 1.

Le galet monté tournant, sur lequel repose le côté de caisse, permet de favoriser le déplacement longitudinal du côté de caisse sur la balancelle, lors de son positionnement longitudinal par rapport à l'ensemble de positionnement.

Dans une autre réalisation de l'invention, les moyens de positionnement latéral du côté de caisse sont constitués par au moins deux butées latérales en vé.

L'ensemble de positionnement est également équipé de moyens de positionnement vertical du côté de caisse.

Ces derniers sont réalisés, de préférence, par au moins un actionneur vertical soulevant le côté de caisse.

Dans un autre aspect de l'invention, les moyens de positionnement comprennent des moyens de positionnement longitudinal et latéral de la balancelle.

Les moyens de positionnement longitudinal et latéral de la balancelle sont constitués, de préférence, d'un pion de centrage destiné à pénétrer dans un trou d'une bride d'une balancelle.

### Liste des figures

L'invention et ses différentes caractéristiques techniques seront décrites à la lecture de la description suivante, qui est accompagnée de quatre figures représentant :
- figure 1, un exemple de structure porteuse utilisée dans le procédé et le système selon l'invention ;
- figure 2, le cadre d'utilisation du procédé et du système selon l'invention auprès d'un robot d'intervention ;
- figure 3, le système selon l'invention, utilisée avec un côté de caisse d'automobile ; et
- figure 4, l'ensemble de positionnement du côté de caisse, selon l'invention ;
- figure 5, une partie avant de l'ensemble de positionnement de côté de caisse selon l'invention ; et
- figure 6, une partie arrière de l'ensemble de positionnement du côté de caisse selon l'invention.

### Description détaillée d'une réalisation de l'invention

Le procédé et le système selon l'invention sont basés sur l'utilisation des moyens de positionnement de la balancelle et du côté de caisse qu'elle transporte, placée sur une structure porteuse, fixée au sol et par rapport aux robots de soudage et placée au-dessus du poste de soudage auquel le côté de caisse doit être amené.

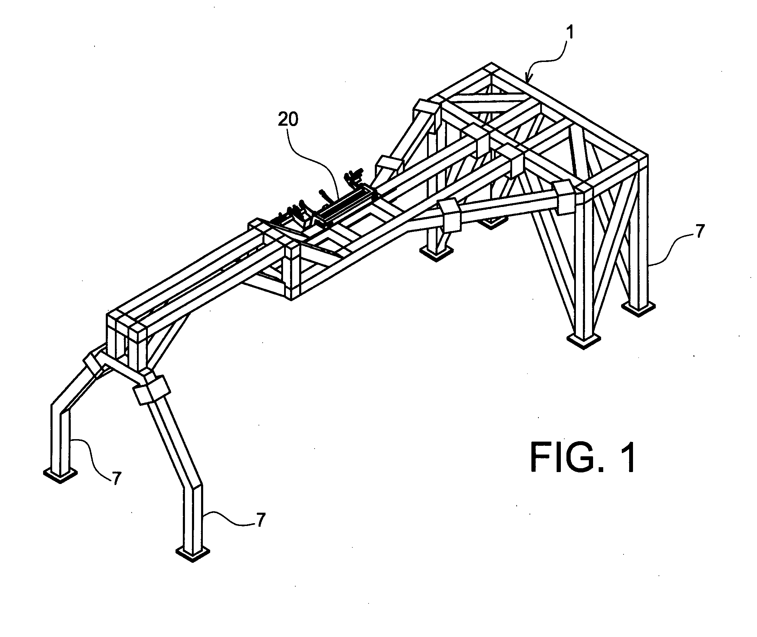

La figure 1 montre très schématiquement un exemple de structure porteuse 1 à laquelle sont assujettis différents moyens de positionnement de la balancelle et du côté de caisse. Ces différents moyens de positionnement 20 sont fixés par rapport à cette structure porteuse 1 sur le milieu de cette dernière.

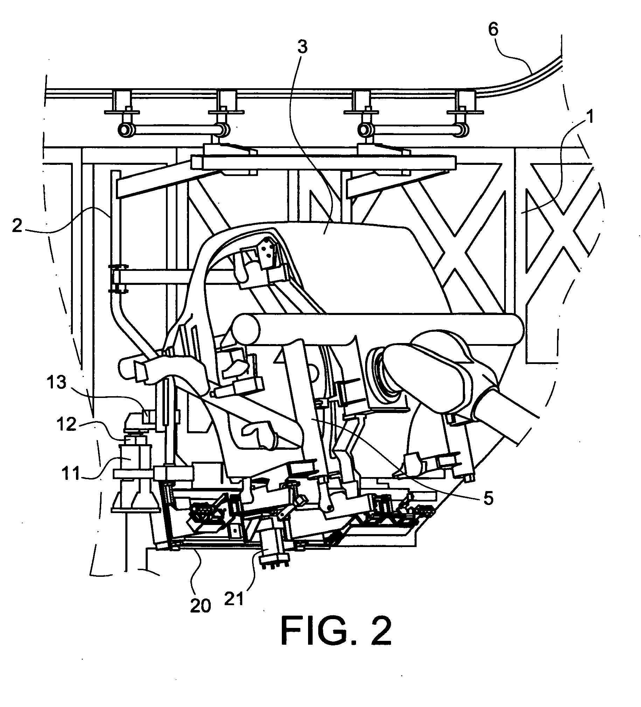

La figure 2 permet de comprendre le cadre de l'utilisation du procédé et du système selon l'invention. En effet, une balancelle 2 est représentée suspendue et se translatant par rapport à un rail 6 placé au-dessus de la chaîne d'assemblage ou de fabrication. La balancelle 2 supporte un côté de caisse 3 d'automobile. Elle est conçue de manière à permettre l'accès pour différents appareils, en particulier un ou plusieurs robots préhenseurs 5 devant venir saisir le côté de caisse.

Sur cette figure 2, la structure porteuse 1 schématisée par plusieurs poutres formant un système triangulé, placés derrière la balancelle 2 est également représenté un moyen de positionnement 11 de la balancelle 2 en translation longitudinale et transversale par rapport au trajet défini par le rail 6 de la chaîne d'assemblage et auquel est assujettie la balancelle 2. En effet, celui-ci possède un pion de centrage 12 susceptible de pénétrer par un mouvement vertical dans un trou de positionnement placé dans une bride 13 de la balancelle 12. Ainsi, cette dernière est positionnée en x et en y sur au moins un point. Un simple appui d'immobilisation en rotation, par exemple en y, non représenté, est placé de l'autre côté de la balancelle 2, à la base de cette dernière est également utilisé en tant que moyen de positionnement.

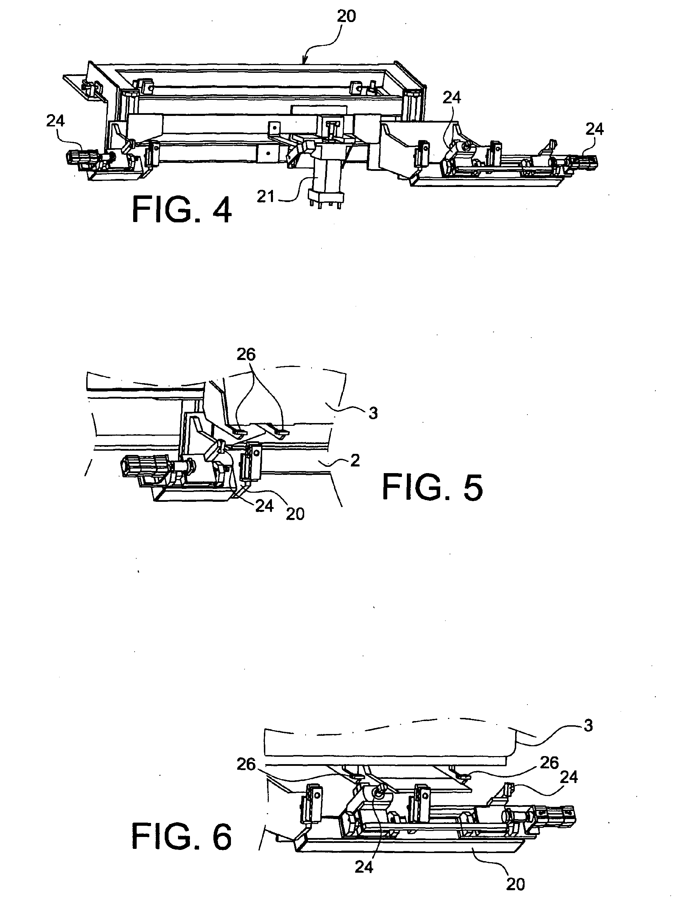

D'autre part, l'ensemble de positionnement du côté de caisse 20 est placé sur la structure porteuse 1 de manière à se trouver sous la balancelle 2 lorsqu'elle arrive, chargée d'un côté de caisse 3. Cet ensemble de positionnement du côté de caisse 20 possède des moyens de positionnement longitudinal et transversal du côté de caisse tels que des butées qui seront mieux localisées sur la figure 4. Il possède en outre un moyen de positionnement vertical du côté de caisse 3, comme un actionneur 21, agissant verticalement de manière à soulever légèrement le côté de caisse 3. On peut d'ailleurs prévoir plusieurs actionneurs 21 pour assurer la stabilité du côté de caisse 3.

Ainsi, une fois arrivée au-dessus de ces ensembles de positionnement, la balancelle 2 est prise en charge par ces moyens de positionnement longitudinal et transversal, tels que le pions de centrage amovible 12. Ensuite, l'ensemble de positionnement du côté de caisse 20 se soulève et prend contact avec le côté de caisse 3 par ces butées latérales positionnées, par exemple, de façon inclinée, de manière à former un vé. Le système de positionnement continue alors sa montée à une hauteur déterminée par rapport à la structure porteuse 1, le positionnement vertical est ainsi assuré. Ensuite, au moins un actionneur horizontal pousse le côté de caisse 3 par rapport à la balancelle 2 dans le sens longitudinal, de manière à le faire venir en butée sur un contact longitudinal de l'ensemble de positionnement de côté de caisse 20. Le positionnement longitudinal est ainsi assuré. Les moyens de préhension 5 peuvent donc agir sans avoir à tâtonner pour saisir le côté de caisse 3 sur lesquels les robots doivent travailler. On note qu'un ou plusieurs galets sont montés libres en rotation autour d'un axe horizontal et transversal par rapport à la balancelle 2, de manière à ce que le côté de caisse 3 puisse se translater facilement dans le sens longitudinal sous l'action de l'actionneur horizontal de l'ensemble de positionnement du côté de caisse 20.

En revenant à la figure 1, représentant la structure porteuse, on comprend mieux la forme de celle-ci qui permet, au moyen d'une plateforme 8, d'installer les moyens de positionnement à la fois de la balancelle 2 et du côté de caisse 3 sans empiéter sur l'espace nécessaire aux différents robots qui doivent intervenir sur le côté de caisse 3 et ne pas empiéter également sur l'espace nécessaire au cheminement de la balancelle 2. Cette structure porteuse 1 permet également, par ses pieds 7 relativement écartés, le cheminement en aval du côté de caisse 3 vers un autre poste d'assemblage ou d'usinage.

Ainsi avec les moyens de positionnement assujettis dans l'espace à la structure porteuse 1, elle-même rigidement fixée au sol par rapport aux robots préhenseurs 5 devant intervenir sur le côté de caisse, il est possible d'appréhender l'approche et le positionnement à la fois de la balancelle 2 et du côté de caisse 3 pendant que le ou les robots intervienne(nt) sur le côté de caisse précédemment traité.

A cet effet et en référence à la figure 2, il faut considérer que le robot préhenseur 5 maintient le côté de caisse de façon fixe à un endroit situé en dehors du volume relatif à la balancelle 2 pour ne pas gêner l'arrivée de la balancelle suivante lors de la fin du cycle relatif au travail sur le côté de caisse précédent.

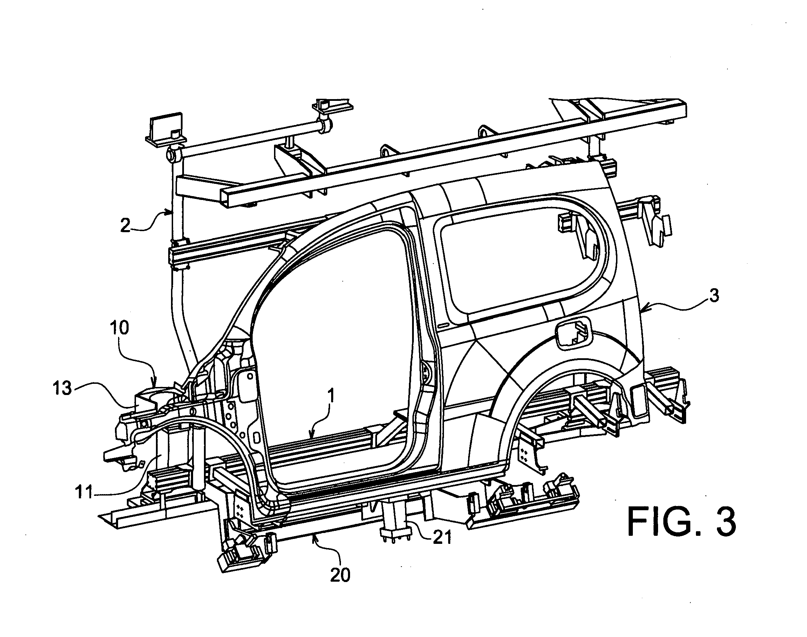

La figure 3 montre en détail la balancelle 2 supportant un côté de caisse 3, les moyens de positionnement de la balancelle 10 comprenant la bride 13 solidaire de la balancelle 2 et l'actionneur 11 permettant au pion de centrage de pénétrer le trou de la bride 13. Cette figure 3 montre également l'ensemble de positionnement du côté de caisse 20 placé sous ce dernier et au niveau de la partie inférieure de la balancelle. On y voit en particulier l'actionneur 21 permettant de soulever le côté de caisse 3 pour le positionnement vertical de ce dernier.

Sur la figure 4, les moyens de positionnement du côté de caisse 20 sont représentés. En particulier, il est possible de distinguer l'actionneur 21 permettant de positionner verticalement le côté de caisse. De plus, des butées mobiles latérales 24 de référence se trouvent de manière déportées au reste de l'ensemble de positionnement du côté de caisse 20.

La figure 5 montre plus en détail une partie de ces moyens de positionnement du côté de caisse 20. En effet, la partie basse avant d'un côté de caisse 3 est représentée en haut à droite sur cette figure 5. On distingue ainsi la partie avant des moyens de positionnement du côté de caisse 20. Ces derniers sont porteurs d'une des butées latérales 24, qui est mobile en translation. En correspondance, la balancelle 2 est équipée de deux tétons de positionnement 26, destinés à coopérer avec cette butée.

De même, la figure 6 montre un détail de l'arrière des moyens de positionnement des côtés de caisse. On y distingue donc la partie basse arrière d'un côté de caisse 3 et des tétons de positionnement 26, solidaires de la balancelle porteuse du côté de caisse 3. Les moyens de positionnement du côté de caisse 20 portent deux butées latérales 24 mobiles en translation, qui doivent coopérer avec les tétons de positionnement 26.

La réalisation décrite est un exemple de réalisation possible, d'autres réalisations pouvant être conçues, dès lors que les moyens de positionnement sont solidaires d'une structure porteuse fixe localisée avec précision par rapport aux robots devant intervenir sur le côté de caisse.

L'avantage principal de l'invention est que tous les moyens de positionnement, à la fois de la balancelle 2 et du côté de caisse 3 peuvent intervenir alors que le ou les robots préhenseurs 5 devant tenir le côté de caisse 3 sont encore occupés sur le côté de caisse précédent. En effet, durant la fin du cycle de soudage ou d'intervention des robots de travail sur un côté de caisse de rang n, les moyens de positionnement peuvent appréhender la balancelle 2 portant le côté de caisse suivant, de rang n + 1, permettant de positionner ce dernier de façon précise, alors que le ou les robots préhenseurs 5 sont encore occupés sur le côté de caisse précédent de rang n. Ainsi, on effectue en temps masqué la localisation ou le positionnement du côté de caisse, par rapport aux robots préhenseurs 5. Ceci permet de gagner un certain temps sur le temps d'intervention global sur chaque côté de caisse au niveau de ce type de poste où des robots 4 de soudage doivent intervenir sur un côté de caisse 3.

## Revendications

1. Procédé de positionnement d'une pièce (3) sur une chaîne d'assemblage ou de fabrication utilisant, pour chaque pièce, une balancelle (2) suspendue à une structure d'un bâtiment, dans lequel est placé un convoyeur de ladite chaîne, pour positionner la pièce (3) devant des moyens opérationnels (4) et utilisant des moyens de préhension (5) à un poste déterminé,
**caractérisé en ce qu'**il consiste à utiliser des moyens de positionnement de la pièce (3) et de la balancelle (2) positionnés par rapport aux moyens opérationnels (4) et étant différents des moyens de préhension (5), ces moyens de positionnement de la pièce (3) et de la balancelle (2) effectuant le positionnement de la pièce suivante (3) pendant la fin du cycle de travail sur la pièce (3) précédente.

2. Système de positionnement pour mettre en oeuvre le procédé selon la revendication 1, dans une chaîne de fabrication de côtés de caisse (3) de véhicules automobiles, comprenant au moins :
- une balancelle (2) pour porter le côté de caisse (3) au poste de travail où il doit être traité ; et
- des moyens opérationnels,
- une structure porteuse (1) fixe et positionnée de façon déterminée par rapport aux moyens opérationnels,
des moyens de positionnement comprenant eux-mêmes un ensemble de positionnement de côtés de caisse (20) mobile verticalement et possédant :
- des moyens de positionnement latéral et horizontal du côté de caisse (3), opérationnels avec un mouvement vertical ascendant de l'ensemble de positionnement du côté de caisse (20), et placés sur la structure porteuse (1) et situés en dessous de la balancelle (2),
**caractérisé en ce qu'**il comprend
- des moyens de positionnement de la balancelle (2) assujettis à la structure porteuse (1), et
- des moyens de positionnement longitudinal constitués par au moins une butée latérale (24) de référence mobile et placée sur l'ensemble de positionnement du côté de caisse, avec un actionneur horizontal agissant dans la direction longitudinale pour positionner le côté de caisse (3) par rapport à l'ensemble de positionnement du côté de caisse (20), la balancelle (2) possédant au moins un galet permettant la translation du côté de caisse (3) par rapport à la balancelle (2).

3. Système selon la revendication 2, **caractérisé en ce que** les moyens de positionnement latéral du côté de caisse (3) sont constitués par au moins deux butées latérales formant un vé.

4. Système selon la revendication 2, **caractérisé en ce qu'**il possède des moyens de positionnement vertical du côté de caisse (3).

5. Système selon, la revendication 4, **caractérisé en ce que** les moyens de positionnement vertical du côté de caisse (3) sont constitués d'au moins un actionneur vertical (21) placé sur l'ensemble de positionnement du côté de caisse (20).

6. Système selon la revendication 2, **caractérisé en ce qu'**il comprend des moyens de positionnement longitudinal et latéral de la balancelle (2).

7. Système selon la revendication 6, **caractérisé en ce que** les moyens de positionnement longitudinal et latéral de la balancelle (2) sont constitués d'un pion de centrage (12) destiné à pénétrer dans un trou d'une bride (13) d'une balancelle (2).

## Claims

1. Method for positioning a part (3) on an assembly or production line using, for each part, a swing tray (2) suspended from a structure of a building, in which a conveyor of the said line is placed, in order to position the part (3) in front of operational means (4) and using gripping means (5) at a determined station, **characterized in that** it consists in using means for positioning the part (3) and the swing tray (2) positioned relative to the operational means (4) and being different from the gripping means (5), these means for positioning the part (3) and the swing tray (2) carrying out the positioning of the next part (3) during the end of the work cycle on the previous part (3).

2. Positioning system for applying the method according to Claim 1, in a production line for producing bodywork sides (3) of motor vehicles, comprising at least:
- one swing tray (2) for carrying the bodywork side (3) to the work station where it must be treated; and
- operational means,
- a carrying structure (1) that is fixed and positioned in a determined manner relative to the operational means,
- positioning means themselves comprising a vertically moveable assembly (20) for positioning bodywork sides and having:
- means for laterally and horizontally positioning the bodywork side (3), which means are operational with an upward vertical movement of the assembly (20) for positioning the bodywork side, and being placed on the carrying structure (1) and situated beneath the swing tray (2), **characterized in that** it comprises
- positioning means for positioning the swing tray (2) which means are secured to the carrying structure (1), and
- longitudinal positioning means consisting of at least one reference lateral stop (24) that can be moved and is placed on the assembly for positioning the bodywork side, with a horizontal actuator acting in the longitudinal direction in order to position the bodywork side (3) relative to the assembly (20) for positioning the bodywork side, the swing tray (2) having at least one roller allowing the bodywork side (3) to move in translation relative to the swing tray (2).

3. System according to Claim 2, **characterized in that** the means for lateral positioning of the bodywork side (3) consist of at least two lateral stops forming a V.

4. System according to Claim 2, **characterized in that** it has means for vertically positioning the bodywork side (3).

5. System according to Claim 4, **characterized in that** the means for vertically positioning the bodywork side (3) consist of at least one vertical actuator (21) placed on the assembly (20) for positioning the bodywork side.

6. System according to Claim 2, **characterized in that** it comprises means for longitudinal and lateral positioning of the swing tray (2).

7. System according to Claim 6, **characterized in that** the means for longitudinal and lateral positioning of the swing tray (2) consist of a centring pin (12) designed to enter a hole in a flange (13) of a swing tray (2).

## Patentansprüche

1. Verfahren zur Positionierung eines Teils (3) an einer Montage- oder Fertigungslinie, das für jedes Teil eine Schaukel (2) verwendet, die an einer Struktur eines Gebäudes aufgehängt ist, in dem eine Fördereinrichtung der Linie angeordnet ist, um das Teil (3) vor Betriebsmitteln (4) und unter Verwendung von Greifmitteln (5) an einer bestimmten Station zu positionieren,
**dadurch gekennzeichnet, dass** es darin besteht, Mittel zur Positionierung des Teils (3) und der Schaukel (2) zu verwenden, die in Bezug auf die Betriebsmittel (4) positioniert sind und von den Greifmitteln (5) verschieden sind, wobei diese Mittel zur Positionierung des Teils (3) und der Schaukel (2) die Positionierung des folgenden Teils (3) während des Endes des Arbeitszyklus am vorangehenden Teil (3) durchführen.

2. Positionierungssystem zur Ausführung des Verfahrens nach Anspruch 1 an einer Fertigungslinie für Karosserieseitenteile (3) von Kraftfahrzeugen, das wenigstens enthält:
- eine Schaukel (2) zum Tragen des Karosserieseitenteils (3) zur Arbeitsstation, wo es behandelt werden muss; und
- Betriebsmittel,
- eine feste Tragestruktur (1), die in bestimmter Weise in Bezug auf die Betriebsmittel positioniert ist,
- Positionierungsmittel, die selbst eine Baugruppe (20) zur Positionierung von Karosserieseitenteilen aufweisen, die vertikal beweglich ist und besitzt:
- Mittel zur lateralen und horizontalen Positionierung des Karosserieseitenteils (3), die mit einer vertikalen ansteigenden Bewegung der Baugruppe (20) zur Positionierung des Karosserieseitenteils betriebsfähig sind und an der Tragestruktur (1) angeordnet sind und unter der Schaukel (2) liegen, **dadurch gekennzeichnet, dass** es aufweist
- Mittel zur Positionierung der Schaukel (2), die an der Tragestruktur (1) befestigt sind, und
- Mittel zur longitudinalen Positionierung, die aus wenigstens einem beweglichen lateralen Referenzanschlag (24) gebildet sind, der an der Baugruppe zur Positionierung des Karosserieseitenteils angeordnet ist, mit einem horizontalen Aktuator, der in der Längsrichtung wirkt, um das Karosserieseitenteil (3) in Bezug auf die Baugruppe (20) zur Positionierung des Karosserieseitenteils zu positionieren, wobei die Schaukel (2) wenigstens eine Rolle besitzt, die die Translation des Karosserieseitenteils (3) in Bezug auf die Schaukel (2) ermöglicht.

3. System nach Anspruch 2, **dadurch gekennzeichnet, dass** die Mittel zur lateralen Positionierung des Karosserieseitenteils (3) aus wenigstens zwei lateralen Anschlägen gebildet sind, die ein V bilden.

4. System nach Anspruch 2, **dadurch gekennzeichnet, dass** es Mittel zur vertikalen Positionierung des Karosserieseitenteils (3) besitzt.

5. System nach Anspruch 4, **dadurch gekennzeichnet, dass** die Mittel zur vertikalen Positionierung des Karosserieseitenteils (3) aus wenigstens einem vertikalen Aktuator (21) gebildet sind, der an der Baugruppe (20) zur Positionierung des Karosserieseitenteils angeordnet ist.

6. System nach Anspruch 2, **dadurch gekennzeichnet, dass** es Mittel zur longitudinalen und lateralen Positionierung der Schaukel (2) aufweist.

7. System nach Anspruch 6, **dadurch gekennzeichnet, dass** die Mittel zur longitudinalen und lateralen Positionierung der Schaukel (2) aus einem Zentrierstück (12) gebildet sind, das in ein Loch eines Flanschs (13) einer Schaukel (2) eindringen soll.
